# EUROPEAN PATENT APPLICATION

(11) **EP 2 149 491 A1**
(43) Date of publication of application: **03.02.2010**
(21) Application number: 08425518.1
(22) Date of filing: 29.07.2008
(51) Int. Cl.: B62M 3/00

(54) **Adapter device for coupling a bearing of a bottom bracket assembly with a bottom bracket box of a bicycle**

(71) Applicant: Campagnolo S.r.l., 36100 Vicenza (VI) (IT)
(72) Inventor: Dal Pra´ , Giuseppe, 36010 Zanè (Vincenza) (IT)
(74) Representative: Castiglia, Paolo

(57) **Abstract**

The invention concerns an adapter device (30, 35) for coupling a bearing (20, 25) of a bottom bracket assembly with a bottom bracket box (3) of a bicycle. The adapter device (30, 35) extends along a longitudinal axis (X) and comprises a housing seat (60) of the bearing and a portion (40) for coupling with the bottom bracket box (3), such a coupling portion (40) comprising a portion (45) for coupling with interference with the aforementioned box. The housing seat (60) of the bearing occupies a position that, in the axial direction, is at least partially distinct from the position occupied by the portion (45) for coupling with interference.

## Description

The present invention concerns an adapter device for coupling a bearing of a bottom bracket assembly with a bottom bracket box suitably provided in the frame of a bicycle.

The invention also concerns a support group of a bottom bracket assembly in the bottom bracket box of the bicycle, such a support group comprising the aforementioned adapter device and at least one bearing coupled with the adapter device.

The invention also concerns a bottom bracket assembly for a bicycle comprising at least one support group of the aforementioned type, and a bicycle comprising at least one adapter device of the aforementioned type. Preferably, the aforementioned bicycle is a racing bicycle.

As known, the motion transmission system of the bicycle comprises a bottom bracket assembly in turn comprising a shaft supported in rotation through rolling bearings in a bottom bracket box suitably formed in the bicycle frame. The shaft is associated, at each of its opposite free ends, with a crank arm. The shaft can be made in a piece which is distinct from the crank arms or else it can be made in a single piece with one of the two crank arms. Alternatively, the shaft can be made in two or more pieces connected together through suitable connection means, each piece being formed integral or not with a respective crank arm.

For the sake of simplicity of explanation, in the rest of the present description and in the subsequent claims, reference shall be made, unless expressly indicated otherwise, to a shaft made in a single piece. However, it is understood that the present description also applies to the case in which the shaft is made in several pieces.

In the most common embodiments of the bottom bracket assemblies of bicycle, a pair of rolling bearings mounted on the opposite free end portions of the shaft is used. In particular, each bearing is housed in a respective adapter device coupled with a respective end of the bottom bracket box. An adapter device is thus operatively arranged between each bearing and the bottom bracket box.

Traditionally, the adapter devices are coupled with the bottom bracket box through threading. The threading nevertheless weakens both the bottom bracket box and the adapter device. Moreover, the threading cannot be provided when the bicycle frame and the adapter devices are made from composite materials.

Patent application EP 1780111 describes a bottom bracket assembly in which the two adapter devices are coupled with interference with the bottom bracket box and the two bearings are coupled with interference with the adapter devices.

The Applicant has found that the use of the adapter devices described in EP 1780111, though on the one hand allows no threading to be made, on the other hand has various drawbacks, the main one of which is that of causing a significant weakening of the bicycle frame at the bottom bracket box, as well as a weakening of the adapter devices themselves.

The Applicant has indeed observed that the aforementioned adapter devices are usually deformed owing to the coupling with interference of the respective bearing, increasing the respective outer diameter. Such adapter devices, thus deformed, often have larger outer dimensions than those which had been designed for the coupling with interference with the bottom bracket box. Thus it may occur that, owing to the effect of the coupling of the adapter device with the bottom bracket box, the latter is subject to a greater deformation than that which is tolerated. In this case, both the bottom bracket box and the adapter devices are subject to internal tensions that significantly lower the fatigue break limit thereof, with a consequent high risk of permanent damage to the aforementioned components.

The Applicant has also observed that a non-negligible part of the deformation of the adapter devices is also absorbed by the bearings, with consequent compression of the respective outer rings; this causes a lower sliding of the rolling elements of the bearings and after all a shorter lifetime of the bearings themselves.

Moreover, the Applicant has observed that, due to the high deformations to which the adapter devices and the bottom bracket box are subject, it is not possible - in the case of permanent damage to the adapter devices - to replace only the adapter devices, but it is necessary to also replace the bicycle frame. This means great costs, especially when frames made from carbon fibre are used.

The technical problem at the basis of the present invention is to provide an adapter device that, once coupled with the bottom bracket box and with the respective bearing, does not cause high deformations of the box and of the bearing and is not itself subject to high internal tensions, so as to increase the lifetime of the aforementioned elements, overcoming the aforementioned drawbacks with reference to the prior art in a simple and effective way.

The present invention therefore concerns, in a first aspect thereof, an adapter device for coupling a bearing of a bottom bracket assembly with a bottom bracket box of a bicycle, the adapter device extending along a longitudinal axis and comprising a housing seat of the bearing and a portion for coupling with said box, said coupling portion comprising a portion for coupling with interference with said box, **characterised in that** said housing seat of the bearing occupies a position that, in the axial direction, is at least partially distinct from the position occupied by said portion for coupling with interference.

In the rest of the present description and in the subsequent claims, by "housing seat" of the bearing it is meant the portion of the adapter device where the bearing is housed when the bottom bracket assembly is mounted on the bicycle. Of course, in some embodiments the bearing is movable in the respective seat to recover the sizing errors of the bottom bracket box. The housing seat of the bearing in this case has a position that can vary even by 1 mm more or less with respect to a nominal position.

Advantageously, the different axial position of the portion for coupling with interference and of the housing seat of the bearing ensures that the radial deformation of the adapter device due to the coupling with interference with the bottom bracket box causes a limited or null deformation of the housing seat of the bearing; the latter is thus compressed to a limited or null extent, thus having a greater sliding capability. This provision is particularly advantageous in the case in which the bearing is coupled with interference with the adapter device. In this case, indeed, the residual tensions due to the two couplings with interference, being active in at least partially different axial positions, only partially add one another or do not add one another at all. Moreover, in the case in which the bearing is in turn coupled with interference with the adapter device, the deformation in the radial direction due to the coupling with interference of the bearing causes a limited or null deformation of the bottom bracket box. In any case, therefore, the coupling between adapter device and bearing is particularly easy and precise.

Preferably, the coupling portion of the adapter device of the present invention also comprises an axial portion distinct from the portion for coupling with interference and also adapted to be inserted into, or fitted onto, the bottom bracket box. Such a distinct axial portion can be a portion adapted to be coupled without interference with the bottom bracket box or an axial portion adapted to be inserted into, or fitted onto, the bottom bracket box without coming into contact with the aforementioned box. In the case in which the aforementioned distinct axial portion is a portion for coupling without interference with the box, said portion for coupling without interference has a radial dimension which is different to the radial dimension of the portion for coupling with interference. In particular, in the case in which the adapter device is adapted to be inserted into the bottom bracket box, the radial dimension of the portion for coupling without interference is shorter than the radial dimension of the portion for coupling with interference. On the other hand, in the case in which the adapter device is adapted to be fitted onto the bottom bracket box the radial dimension of the portion for coupling without interference is greater than the radial dimension of the portion for coupling with interference.

Irrespective of the specific embodiment of the adapter device of the present invention, the difference between the radial dimension of the portion for coupling without interference and the radial dimension of the portion for coupling with interference is, in absolute value, no less than 0.001 mm. Such a difference can therefore be very small, but in any case sufficient to allow a coupling with interference to be made at an area of the adapter device and a coupling without interference to be made at another area of the adapter device.

Preferably, the housing seat of the bearing occupies a position that, in the axial direction, coincides with the position occupied by the portion for coupling with interference for a part no longer than two thirds, and more preferably for a part no longer than one third, of the axial length of the portion for coupling with interference.

In the preferred embodiments of the adapter device of the present invention, the housing seat of the bearing occupies a position that, in the axial direction, is totally distinct from the position occupied by the portion for coupling with interference.

Preferably, the aforementioned axial portion distinct from the portion for coupling with interference is at least partially elastically yieldable.

Advantageously, the Applicant has found that the desired stability in the coupling between adapter device and bottom bracket box can be obtained by simply making at least one part of the portion adapted to be inserted into, or fitted onto, the bottom bracket box elastically yieldable. Indeed, the aforementioned elastically yieldable part acts in such a case as a centring element of the adapter device in the bottom bracket box and is opposed by friction to the slipping of the adapter device from the bottom bracket box. It is thus possible to make a precise and stable coupling of the adapter device in the bottom bracket box, limiting the axial extension of the portion for coupling with interference with the bottom bracket box. This is particularly advantageous given that, as known, the coupling with interference generates deformations of the box and of the adapter device; in this case, the limited axial extension of the portion for coupling with interference implies a substantial reduction of the aforementioned deformations, with a consequent solution of the problems discussed above with reference to the prior art.

In the case in which the aforementioned coupling portion is adapted to be inserted into the bottom bracket box, the second axial portion is at least elastically yieldable towards the inside of the adapter device, whereas in the case in which the aforementioned coupling portion is, on the other hand, adapted to be fitted onto the bottom bracket box, the second axial portion is elastically yieldable towards the outside of the adapter device.

In preferred embodiments of the adapter device of the present invention, the device comprises an elastically yieldable element fitted onto, or inserted into, the portion of the device adapted to be inserted into, or fitted onto, the bottom bracket box. Preferably, such an element is a conventional O-ring.

The use of an O-ring is particularly advantageous in view of the easiness of finding and using thereof. In this way a particularly simple and cost-effective embodiment of the adapter device of the present invention is obtained. For example, it is possible to use an O-ring typically used in hubs of bicycle wheels.

Preferably, the O-ring is housed in a throat formed on the portion of the adapter device adapted to be inserted into, or fitted onto, the bottom bracket box. Advantageously, the throat holds the O-ring in position during the insertion/fitting of the adapter device into/onto the bottom bracket box.

An embodiment is provided in which the device of the present invention comprises a plurality of O-rings, preferably axially spaced apart one another.

As an alternative to the O-ring, it is possible to use an elastic element which is integral with the aforementioned portion of the adapter device adapted to be inserted into, or fitted onto, the bottom bracket box, for example through gluing or, in the case in which the adapter device is made from composite materials, through co-moulding.

In an alternative embodiment of the adapter device of the present invention, the elastically yieldable portion comprises a hollow cylindrical portion provided with a plurality of notches. Advantageously, the notches give the desired elastic yieldingness.

Preferably, the aforementioned notches extend parallel to the longitudinal axis of the adapter device.

More preferably, the aforementioned hollow cylindrical portion comprises, at a free end edge thereof, an annular flange adapted to be snap-housed into a corresponding throat formed in the bottom bracket box. This contributes to the centring and to the immobilisation of the adapter device in the bottom bracket box, preventing it from accidentally slipping out.

In the preferred embodiments thereof, the adapter device of the present invention comprises at least one surface of axial abutment having radial dimensions which are different to those of said portion for coupling with interference. In particular, such radial dimensions are increased with respect to those of said portion for coupling with interference in the case in which the adapter device is adapted to be inserted into the bottom bracket box, and reduced with respect to those of said portion for coupling with interference in the case in which the adapter device is adapted to be fitted onto said box.

Advantageously, the aforementioned surface of axial abutment prevents the adapter device from tilting with respect to the direction of insertion/fitting into/onto the bottom bracket box during the mutual coupling of the aforementioned components or once the coupling is complete, for example because of an asymmetrical squashing of the elastically yieldable element. Such a provision thus allows the axial extension of the portion for coupling with interference to be further limited.

Preferably, the aforementioned surface of axial abutment has a substantially circumferential extension. In this way, the axial abutment between adapter device and bottom bracket box takes place at an annular surface, in this way making the counteraction to a possible undesired tendency of the adapter device to take up an inclined position with respect to the direction of insertion/fitting into/onto the bottom bracket box particularly effective.

The surface of axial abutment can be made at an end flange of the adapter device adapted to go into abutment with a corresponding abutment surface defined on a front free end surface of the bottom bracket box. In addition or as an alternative to the flange, the adapter device can comprise a surface of axial abutment axially arranged between the portion for coupling with interference and the axial portion adapted to be inserted into, or fitted onto, the bottom bracket box and distinct from the portion for coupling with interference. The aforementioned surface of axial abutment is adapted to go into abutment with a corresponding abutment surface defined inside the bottom bracket box.

Preferably, the portion for coupling with interference has an axial length shorter than or equal to one third of the axial length of said adapter device. More preferably, the axial length of the portion for coupling with interference is shorter than or equal to half the axial length of the entire portion adapted to be inserted into, or fitted onto, the bottom bracket box, or else shorter than or equal to the axial length of the axial portion adapted to be inserted into, or fitted onto, the bottom bracket box and distinct from the portion for coupling with interference.

Preferably, the portion for coupling with interference has an outer diameter equal to 41.960 mm with tolerance of between +0.05 mm and +0.1 mm. Such an adapter device is particularly suitable for being used in a bicycle in which the bottom bracket box has at least one free end portion whose inner diameter is equal to 41.960 mm with tolerance of between 0 mm and +0.025 mm.

Alternatively, the portion for coupling with interference has an outer diameter equal to 41 mm with tolerance of between 0 mm and +0.05 mm. Such an adapter device is particularly suitable for being used in a bicycle in which the bottom bracket box has at least one free end portion whose inner diameter is equal to 41 mm with tolerance of between -0.08 mm and 0 mm or else between -0.08 mm and - 0.03 mm.

It should be noted that the dimensions of the bottom bracket boxes of bicycles are set by agreements between frame manufacturers and bottom bracket assembly manufacturers. Amongst the most recent agreements on the dimensions of bottom bracket boxes those with the following nominal dimensions seem destined to prevail (diameter X length, in mm): 41 X 86.5 and 41.960 X 68, the latter being developed by Cannondale and being known as standard BB30. Advantageously, the adapter device of the present invention is perfectly usable with bottom bracket boxes having the aforementioned dimensions.

In a second aspect thereof, the present invention concerns a support group of a bottom bracket assembly in a bottom bracket box of a bicycle, the aforementioned support group comprising an adapter device of the type described above and at least one bearing coupled with said adapter device.

Preferably, such a support group has, individually or in combination, all of the structural and functional features discussed above with reference to the adapter device of the present invention and therefore it has all of the aforementioned advantages.

Preferably, the axial length of the portion for coupling with interference of the adapter device is shorter than or equal to the axial length of the bearing, more preferably shorter than or equal to half the axial length of the bearing.

The bearing can be coupled with the adapter device through a transition coupling or a coupling with clearance, or alternatively through a coupling with interference. Preferably, the bearing is coupled with the adapter device through a transition coupling or a coupling with clearance when the bearing is adapted to be coupled with interference with the shaft of the bottom bracket assembly. The bearing, on the other hand, is preferably coupled with interference with the adapter device when the bearing is adapted to be coupled with the shaft of the bottom bracket assembly through a transition coupling or a coupling with clearance.

In the present description and in the subsequent claims, by "transition coupling" it is meant a coupling such that the coupling and/or decoupling can take place without the help of a tool, but still requires the application of a certain force. By "coupling with clearance", on the other hand, it is meant a coupling such that the coupling and/or decoupling does not require the application of any force.

In a third aspect thereof the present invention concerns a bottom bracket assembly for a bicycle, such an assembly comprising at least one support group of the type described above.

Preferably, such an assembly has, individually or in combination, all of the structural and functional features discussed above with reference to the adapter device and to the support group of the present invention and therefore it has all of the aforementioned advantages.

Preferably, the assembly of the present invention comprises two support groups of the type described above.

In a first embodiment of the bottom bracket assembly of the present invention, the assembly comprises a shaft supported in rotation by at least one bearing, said at least one bearing being coupled with interference with the shaft and being coupled through a transition coupling or through a coupling with clearance with the respective adapter device.

In a second embodiment of the bottom bracket assembly of the present invention, the assembly comprises a shaft supported in rotation by said at least one bearing, said at least one bearing being coupled with interference with the respective adapter device and being coupled through a transition coupling or through a coupling with clearance with the shaft.

In a fourth aspect thereof the present invention concerns a bicycle comprising a bottom bracket box and at least one adapter device for coupling a bearing of a bottom bracket assembly with said box, the adapter device extending along a longitudinal axis and comprising a housing seat of the bearing and a portion for coupling with interference with said box, **characterised in that** said housing seat of the bearing occupies a position that, in the axial direction, is at least partially distinct from the position occupied by said portion for coupling with interference. Preferably, such a bicycle comprises a support group of the type described above. More preferably, the aforementioned bicycle comprises a bottom bracket assembly of the type described above.

The bicycle of the present invention thus has, individually or in combination, all of the structural and functional features discussed above with reference to the adapter device, the support group and the bottom bracket assembly of the present invention and therefore it has all of the aforementioned advantages.

Preferably, the bottom bracket box has at least one free end portion whose inner diameter is equal to 41.960 mm with tolerance of between 0 mm and +0.025 mm. The bicycle in this case preferably comprises an adapter device wherein the portion for coupling with interference of the adapter device has an outer diameter equal to 41.960 mm with tolerance of between +0.05 mm and +0.1 mm.

Alternatively, the bottom bracket box has at least one free end portion whose inner diameter is equal to 41 mm with tolerance of between -0.08 mm and 0 mm or else between - 0.08 mm and -0.03 mm. The bicycle in such cases preferably comprises an adapter device wherein the portion for coupling with interference of the adapter device has an outer diameter equal to 41 mm with tolerance of between 0 mm and +0.05 mm.

A diameter of the bottom bracket box substantially equal to 42 mm is particularly advantageous because it makes it possible not to use any adapter device, being indeed possible to use a bearing of standard dimensions directly coupled with interference with the bottom bracket box.

However, alternative embodiments of the bicycle of the present invention are provided wherein the bottom bracket box has at least one free end portion whose inner diameter is sized with a coupling tolerance belonging to classes H6 or H7 of the standard ISO/R 286 and wherein the first axial portion of the adapter device coupled with such a box has an outer diameter sized with a coupling tolerance belonging to classes n5, n6, p6, r6, s6, t6, u6 or x6 of the standard ISO/R 286.

In an embodiment of the bicycle of the present invention, the housing seat of the bearing provided in the adapter device is at least partially arranged axially outside the bottom bracket box.

In an alternative embodiment of the bicycle of the present invention, the housing seat of the bearing provided in the adapter device is arranged in the axial direction totally outside said bottom bracket box. Such an embodiment is particularly advantageous in the case in which the bearing is in turn coupled with interference with the adapter device, since the residual tensions due to the two couplings with interference are in different axial positions and therefore do not add one another or add one another only partially.

Preferably, the axial length of the portion for coupling with interference of the adapter device is shorter than or equal to one fifth, more preferably one sixth and even more preferably one seventh, of the axial length of the bottom bracket box.

Advantageously, the weight of the adapter device is thus reduced, which is particularly advantageous in the field of racing bicycles.

Further features and advantages of the present invention shall become clearer from the following detailed description of some preferred embodiments thereof, made with reference to the attached drawings and given for indicating and not limiting purposes. In such drawings:
- figure 1 schematically represents a perspective view of a bicycle comprising a bottom bracket assembly provided with adapter devices according to the present invention;
- figure 2 schematically represents a longitudinal view, partially sectioned, of the bottom bracket assembly for the bicycle of figure 1, in which the adapter devices housed in the bottom bracket box can be seen;
- figure 3 schematically represents an enlarged longitudinal section of the two adapter devices of figure 2, housed in the bottom bracket box of figure 2;
- figure 4 schematically represents an enlarged longitudinal section of a detail of one of the two adapter devices of figure 3;
- figures 5 to 7 and figures 9 and 10 schematically represent longitudinal sections, analogous to that of figure 3, of further embodiments of adapter devices according to the present invention, housed in a bottom bracket box analogous to that of figure 2;
- figure 8 schematically represents a longitudinal view of a further embodiment of an adapter device according to the present invention.

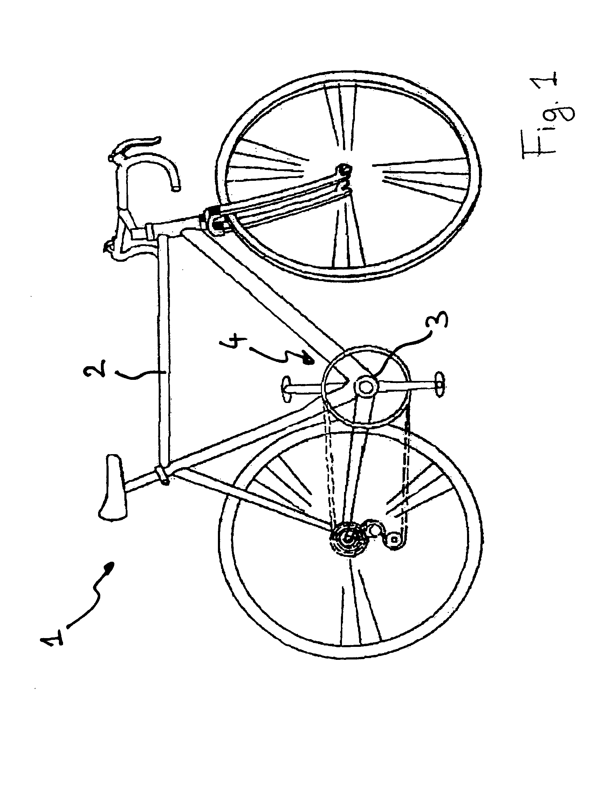

With initial reference to figure 1, a bicycle 1 is shown comprising a frame 2 where a box 3 for housing a bottom bracket assembly 4, hereafter for the sake of simplicity called "bottom bracket box", is formed.

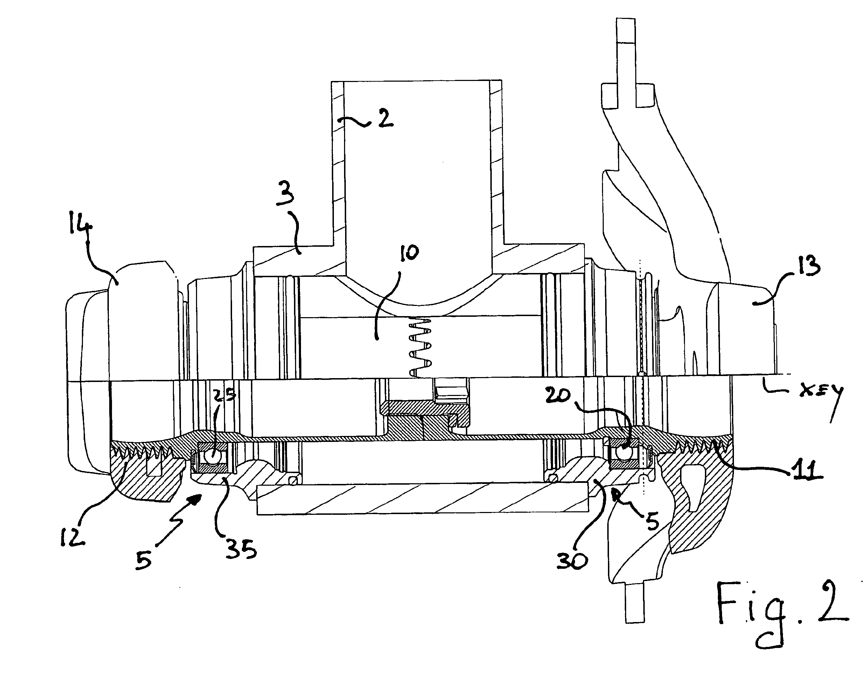

The bottom bracket assembly 4 is better illustrated in figure 2, which represents a view in which the bottom bracket box 3 has been sectioned, just as the lower half of the assembly 4 is in section.

The bottom bracket assembly 4 comprises a shaft 10 coupled at the opposite free end portions 11 and 12 thereof respectively with a right crank arm 13 and with a left crank arm 14. The shaft 10 is supported in rotation in the bottom bracket box 3 through a pair of right and left bearings 20 and 25, located near the respective free end portions 11 and 12 of the shaft 10.

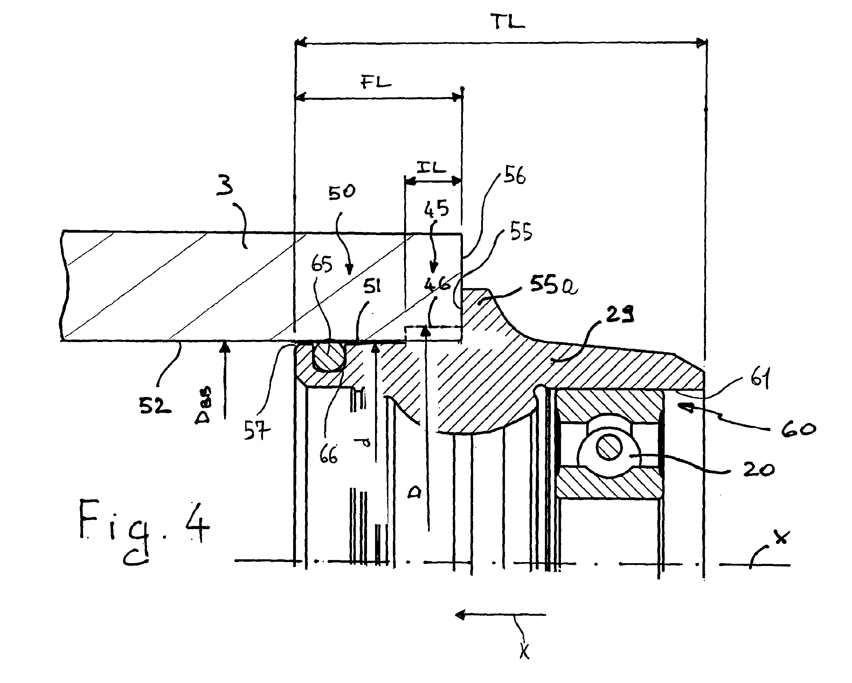

The bearings 20 and 25 are in turn supported in the bottom bracket box 3 through respective adapter devices 30 and 35. In the rest of the present description and in the subsequent claims, the group comprising an adapter device 30, 35 coupled with the respective bearing 20, 25 is indicated as support group 5 of the shaft 10. An enlarged detail of the support group 5 is illustrated in figure 4.

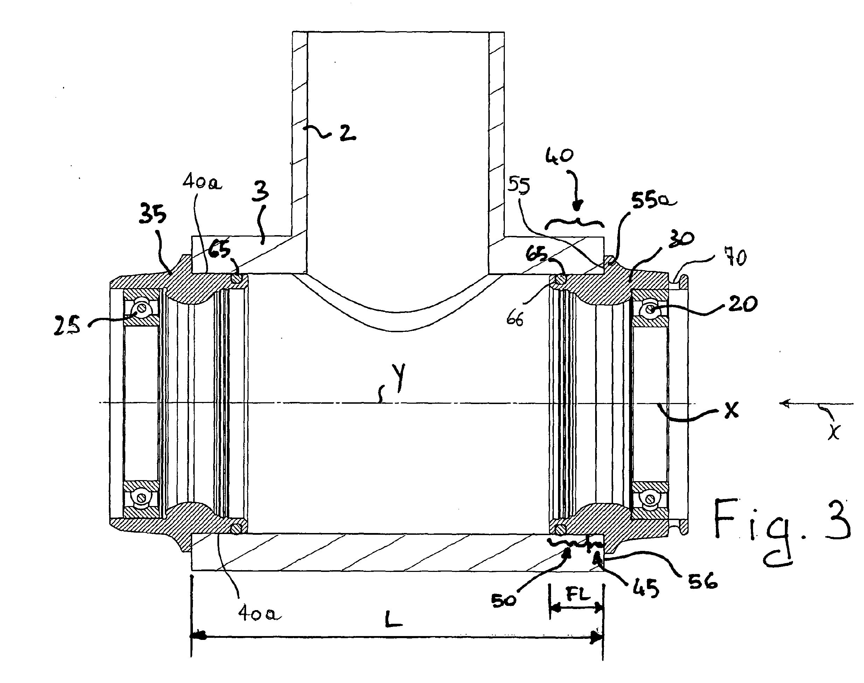

Figure 3 illustrates in greater detail the coupling of the adapter devices 30 and 35 with the bottom bracket box 3 and with the respective bearings 20 and 25.

Hereafter for the sake of simplicity it shall be referred to just the adapter device 30; however, what is stated should be considered valid also for the adapter device 35, unless specified otherwise.

The adapter device 30 extends, preferably symmetrically, about a longitudinal axis X, which defines its coupling direction with the box 3, in particular the direction of insertion of the adapter device 30 in the box 3. The axis X, in a condition with the assembly 4 mounted in the box 3, coincides with the rotation axis of the bearings 20 and 25, and with a longitudinal axis of symmetry Y of the bottom bracket box 3.

In the coupled condition of figure 3, the adapter device 30 comprises a coupling portion 40 inserted inside the bottom bracket box 3. The coupling portion 40 in turn comprises a first axial portion 45, coupled with interference with the inner surface of the box 3, and a second axial portion 50 coupled without interference with the inner surface of the box 3. The first axial portion 45 follows the second axial portion 50 with reference to the coupling direction of the adapter device 30 with the bottom bracket box 3, such a coupling direction being indicated with the arrow x in figure 3 and 4.

The radial coupling between the coupling portion 40 of the adapter device 30 and the bottom bracket box 3 takes place at a cylindrical surface 40a of the adapter device 30 extending coaxially to the longitudinal axis X.

With reference to figures 3 and 4, the adapter device 30 comprises, at a free end portion of the first axial portion 45, and therefore on the opposite side to the second axial portion 50, an annular surface 55 of axial abutment. The surface 55 of axial abutment has greater radial dimensions than the coupling portion 40; in particular, the abutment surface 55 is defined on a flange 55a extending perpendicular to the longitudinal axis X of the adapter device. The abutment surface 55 stops in abutment against a front surface 56 at the free end of the bottom bracket box 3, such a surface 56 preferably being annular too and defined on a plane perpendicular to the axis Y.

Preferably, in order to better support the canti-levered load that derives from the arrangement of the bearings totally outside the bottom bracket box 3, the abutment surface 55 has a radial dimension sufficient to ensure that it can cooperate in abutment with at least half of the front annular surface 56 of the bottom bracket box 3.

Preferably the first axial portion 45, the second axial portion 50 and the abutment surface 55 are defined on a main body 29 (figure 4), made in a single piece. However, the possibility that portions 45, 50 and portion 55 be defined on distinct pieces assembled one another is not excluded.

The bearing 20 is housed in a housing seat 60 that occupies a position that, in the axial direction, is at least partially distinct from the axial position occupied by the first axial portion 45. In particular, in the case of figure 4, the axial position of the first axial portion 45 is totally distinct from the axial position of the seat 60.

Preferably, the bearing 20 is inserted into the seat 60 with a movable coupling, like for example a coupling with clearance or a transition coupling, and it is coupled with interference with the shaft 10. However, providing a coupling with interference of the bearing 20 with the housing seat 60, and a movable coupling with the shaft 10 is not excluded.

Preferably, the coupling portion 40 inserted into the bottom bracket box 3 has an axial length FL shorter than or equal to one fifth of the axial length L of the bottom bracket box 3. More preferably, the axial length FL is shorter than or equal to one sixth of the axial length L and even more preferably the length FL is shorter than or equal to one seventh of the length L.

Figure 4 allows to view in even greater detail the dimensional relationships of the adapter device 30. In particular, it can be seen that the first axial portion 45 has a dimension in the axial direction, which is indicated as axial length IL, that is shorter than or at most equal to half the axial length TL of the adapter device 30. Even more preferably, the axial length IL is shorter than or at most equal to half the axial length FL, preferably shorter than the axial length of the second axial portion 50. The preferred embodiments are, however, those in which the axial length IL is shorter than or equal to one third of the axial length FL. The bearing 20, when it is housed in its seat 60, is located, in the axial direction, at the first axial portion 45.

Preferably, the axial length IL is shorter than or equal to the axial length BL of the bearing 20, measured in the direction of the axis X. Even more preferably, the axial length IL is shorter than or equal to half the axial length BL of the bearing 20.

The first axial portion 45 comprises an outer cylindrical surface 46, shown with a broken line in figure 4 and represented with an exaggerated radial dimension solely for illustrative purpose. Preferably, the cylindrical surface 46 has a D of between 41 mm and 42 mm, where the diameter D of 42 mm is particularly advantageous because it makes it possible to use, instead of the support group 5, a bearing of standard dimensions, which is thus directly coupled with interference with the bottom bracket box 3.

Preferably, the diameter D is selected in one of the following two ranges, the extremes thereof being included: nominal value equal to 41.960 mm with tolerance of between +0.05 mm and +0.1 mm and nominal value 41 mm with tolerance of between 0 mm and +0.05 mm.

In the first case (nominal value of the diameter D equal to 41.960 mm with tolerance of between +0.05 mm and +0.1 mm), the bottom bracket box 3 has a free end portion whose inner diameter is equal to 41.960 mm with tolerance of between 0 mm and +0.025 mm.

In the second case (nominal value of the diameter D equal to 41 mm with tolerance of between 0 mm and +0.05 mm) the bottom bracket box 3 has a free end portion whose inner diameter is equal to 41 mm with tolerance of between -0.08 mm and 0 mm or else between -0.08 mm and -0.03 mm.

However embodiments of the adapter device 30 of the present invention are provided in which the diameter D of the first axial portion is selected with a coupling tolerance belonging to classes n5, n6, p6, r6, s6, t6, u6 or x6 of the standard ISO/R 286. In this case, the bottom bracket box 3 has a free end portion whose inner diameter is sized with a coupling tolerance belonging respectively to classes H6 or H7 of the standard ISO/R 286.

The second axial portion 50 comprises an outer cylindrical surface 51, which has a smaller diameter d than the diameter D of the cylindrical surface 46. The difference D-d can also be of the order of magnitude of a hundredth of a millimetre. Preferably, D-d ≥ 0.001 mm (in figure 4 the difference is deliberately exaggerated for illustrative purposes). In any case, the diameter d of the cylindrical surface 51 must be such as not to generate a coupling with interference with the bottom bracket box 3, but such as to generate a transition coupling or a coupling with clearance. This allows the second axial portion 50 to be inserted without damaging the bottom bracket box 3 at the area in which it is coupled with the first axial portion 45.

As shown in figure 4, the inner cylindrical surface 52 of the bottom bracket box 3 has, at least at the first axial portion 45 of the adapter device 30, a smaller diameter DBB than the diameter D; the diameter DBB is preferably selected in one of the following three ranges, the extremes thereof being included: nominal value equal to 41.960 mm with tolerance of between 0 mm and +0.025 mm, nominal value equal to 41 mm with tolerance of between -0.08 mm and 0 mm and nominal value equal to 41 mm with tolerance of between -0.08 mm and -0.03 mm.

The cylindrical surface 51 acts as a guide surface of the adapter device 30 during its insertion into the bottom bracket box 3, avoiding the adapter device 30 and the bottom bracket box 3 from being able to become misaligned.

Of course, this possibility is limited to the embodiment of the adapter device 30 wherein the cylindrical surface 51, during insertion, precedes the cylindrical surface 46. However, an alternative embodiment of the adapter device 30 is provided in which the second axial portion 50 follows the first axial surface 45 with reference to the direction x of coupling of the adapter device 30 in the bottom bracket box 3; in this case, the second axial portion 50 does not have a guide function.

In addition or as an alternative to the cylindrical surface 51 it is advantageous to obtain the guide effect through an elastically yieldable surface portion having increased radial dimensions with respect to the radial dimension of the adjacent coupling surface portion. In the example of the adapter device 30 of figures 3 and 4, the elastically yieldable surface portion is defined on an O-ring 65 fitted onto the coupling portion 40 of the adapter device 30. In particular, the O-ring is housed in an annular throat 66 made in the second axial portion 50 of the adapter device 30, so as to project radially outwards with respect to the outer cylindrical surface of the second axial portion 50.

According to a variant embodiment that has not been illustrated, the use of two or more O-rings axially spaced apart one another is foreseen.

As shown in figure 3, the adapter device 30 comprises, at a free end portion thereof intended to remain outside the bottom bracket box 3 when the adapter device 30 is coupled with such a box, a throat 70 adapted to house a split pin (not shown) that retains the bearing 20 in the seat 60, as described in patent application No. EP 1829779 to the same Applicant.

Figure 4 also shows how the adapter device 30 comprises, at the free end edge of the second axial portion 50, a front bevel 57; such a bevel 57 precedes, in the coupling direction x, the remaining part of the second axial portion 50, making it easier to insert the bottom bracket box 3.

The adapter device 35 differs from the adapter device 30 essentially only in that it does not comprise the throat 70 for the split pin.

The housing seat 60 of the bearing 20 is defined by an outer cylindrical surface 61 having dimensions such as to make a transition coupling with a bearing of standard dimensions, so that the bearing can be inserted manually and is still stable. However, a dimensional tolerance such as to make a coupling with clearance or with interference is not excluded.

In figures 3 and 4 it can be seen how the housing seat 60 of the bearing 20 is such as to support the bearing 20 totally outside the bottom bracket box 3. In other words, the axial position of the housing seat 60 is totally distinct from the axial position of the first axial portion 45.

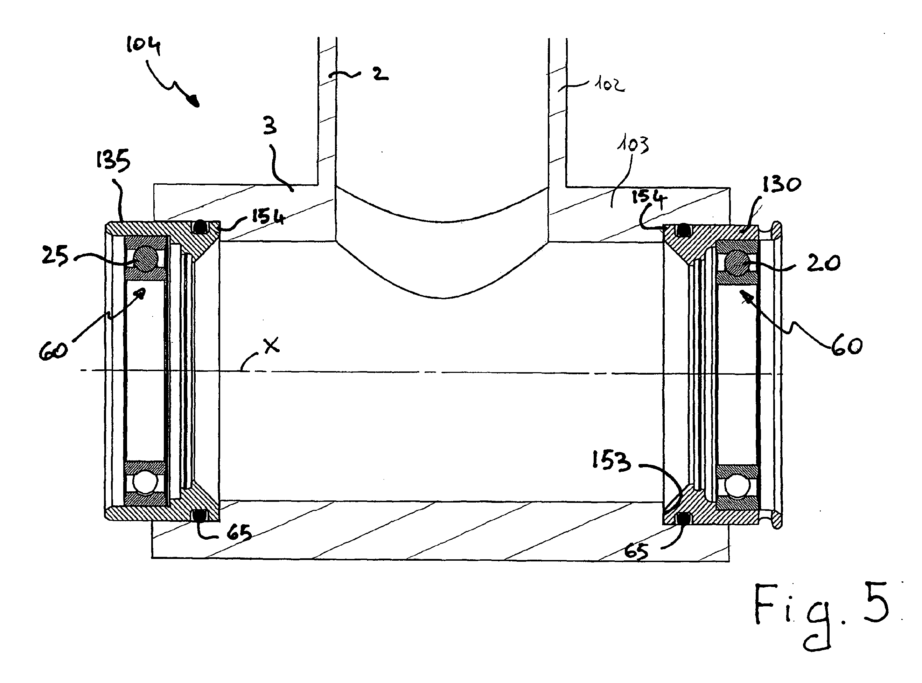

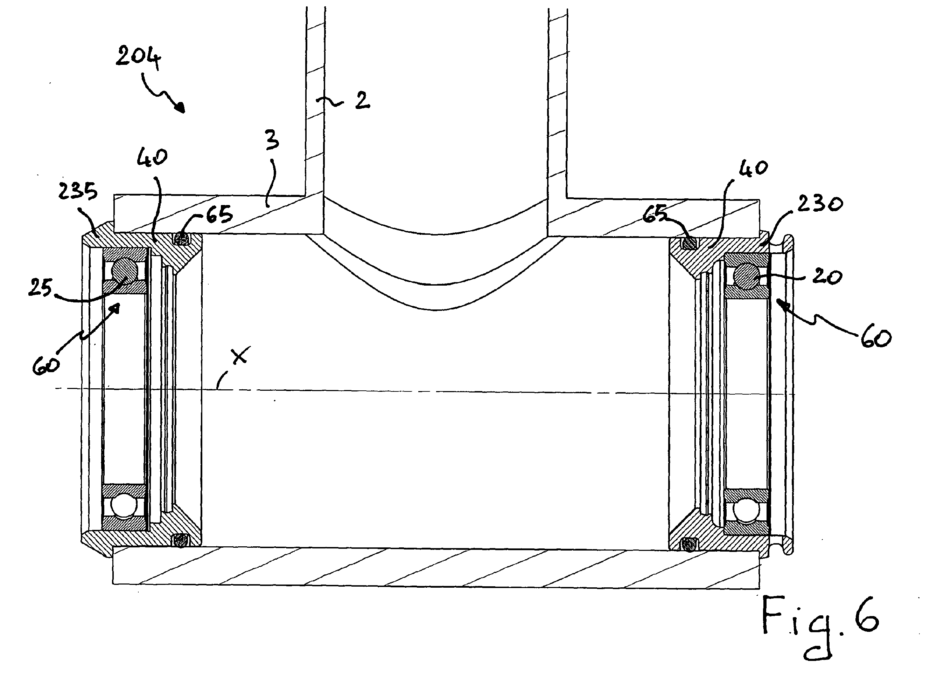

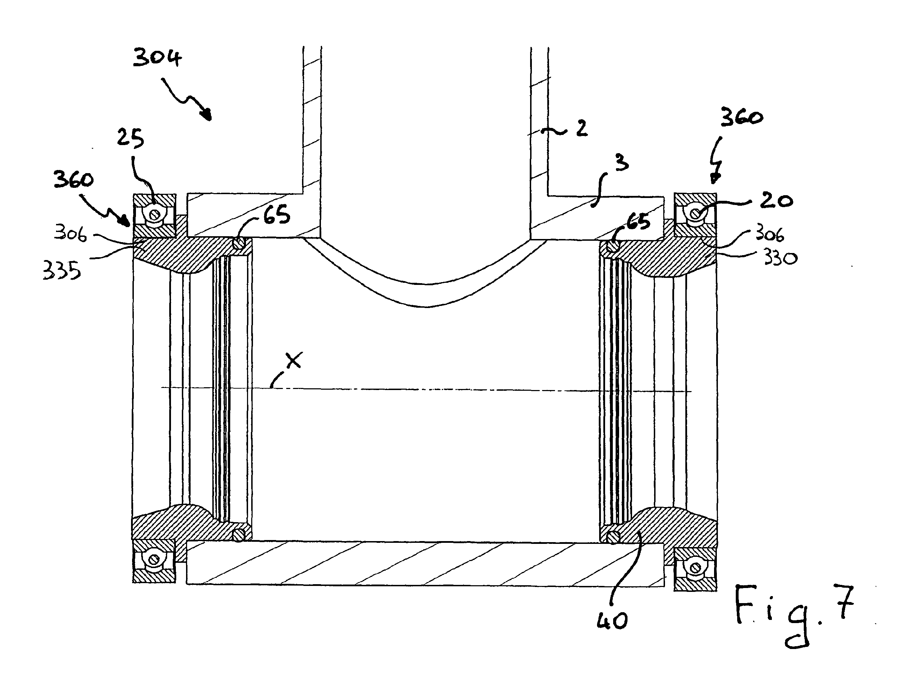

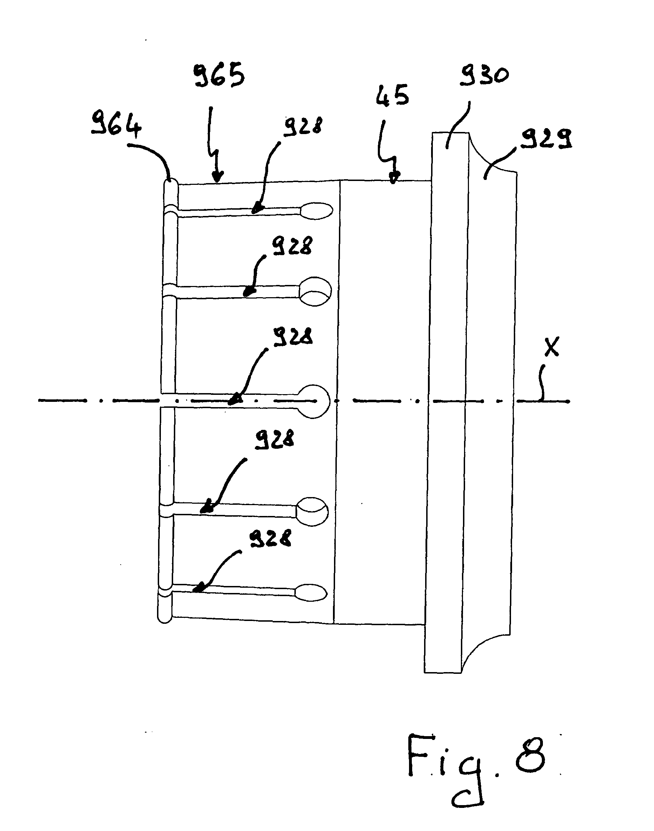

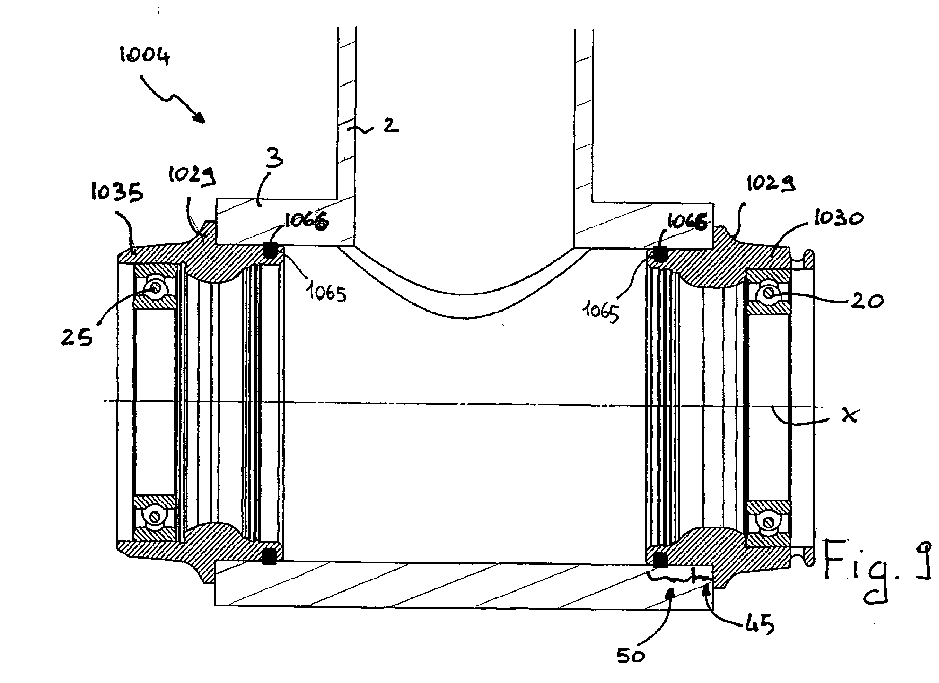

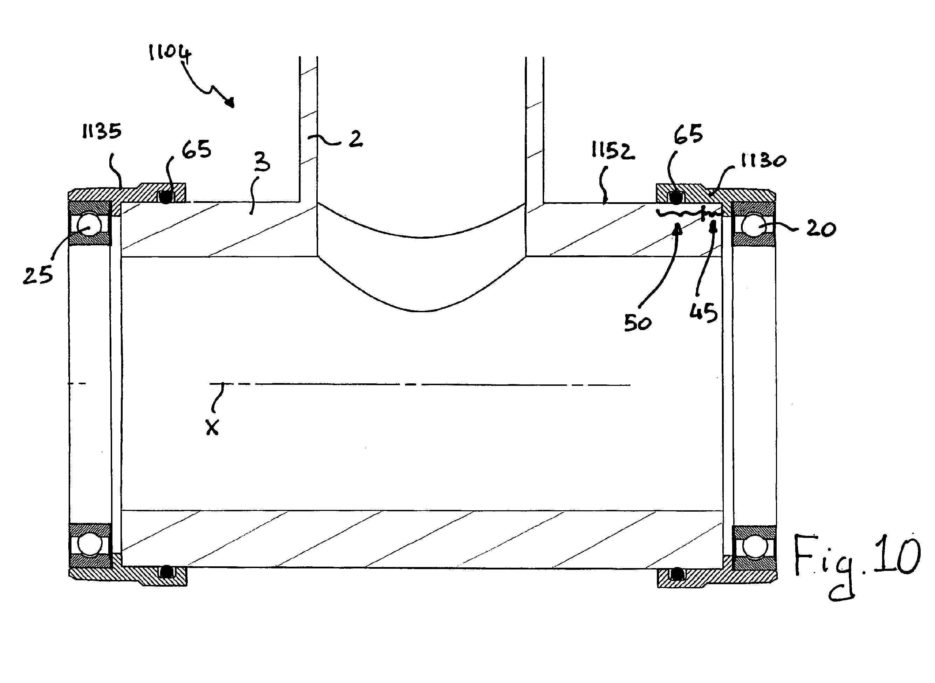

Hereafter, some further embodiments of bottom bracket assemblies according to the present invention shall be described, in which elements identical to those of the bottom bracket assembly 4 described above with reference to figures 1-4 shall be indicated with the same reference numerals and shall not be described any further, whereas elements corresponding to those of the bottom bracket assembly 4 shall be indicated with the same reference numeral increased by 100 in figure 5, 200 in figure 6, 300 in figure 7, 400 in figure 8, 500 in figure 9, 600 in figure 10, 700 in figure 11, 800 in figure 12, 900 in figure 13 and 1000 in figure 14.

Figure 5 shows the essential components of an alternative embodiment of the bottom bracket assembly of the invention, which is indicated with 104 and which differs from that of figure 3 in that the housing seat 60 for the bearing 20 formed in each of the adapter devices 130 and 135 is arranged in a position such as to support the respective bearing 20 and 25 in a position which is only partially axially outside the bottom bracket box 203 of figure 6. Such a position indeed at least partially overlaps the axial position of the first axial portion 45. In particular, the axial position of the seat 60 for housing the bearing is such that substantially one third of each bearing 20, 25 is arranged inside the bottom bracket box 103. In other words, the axial position of the housing seat 360 is only partially distinct from the axial position of the first axial portion 45. Moreover, the adapter devices 130 and 135 comprise, at the respective free end front surface, a surface 154 of axial abutment, preferably annular and perpendicular to the axis X, adapted to go into abutment against a corresponding surface 153 of axial abutment, preferably annular and perpendicular to the axis Y, made inside the bottom bracket box 103.

Figure 6 shows the essential components of an alternative embodiment of the bottom bracket assembly of the invention, which is indicated with 204 and which differs from that of figure 3 in that the axial position of the seat 60 for housing the bearing is such that substantially two thirds of each bearing 20, 25 is arranged inside the bottom bracket box 203.

Figure 7 shows the essential components of an alternative embodiment of the bottom bracket assembly of the invention, which is indicated with 304 and which differs from that of figure 3 only in that the bearings 20 and 25 are coupled with the respective adapter device 330 and 335 at a radially inner surface 306 of the bearings. In other words, the housing seat 360 of the bearings is arranged radially outside the respective adapter devices 330 and 335.

Figure 8 shows an alternative embodiment of the adapter device of the invention, which is indicated with 930 and which differs from the adapter device 30 of figure 4 in that the elastically yieldable surface portion (obtained in the adapter device 30 of figure 4 through the use of the O-ring) is obtained by forming a suitably notched hollow end portion 965 in the main body 929 of the adapter device 930.

In particular, the free end portion 965 of the coupling surface 940 is made elastic thanks to a series of notches 928 preferably substantially parallel to the axis X. On the free end edge of the elastic portion 965 a flange 964 having an annular extension (the continuity of which is interrupted by the aforementioned series of notches 928) is preferably formed. Such a flange 695 is adapted to snap-clasp into a corresponding annular throat formed inside the bottom bracket box 3 (not illustrated). In the case illustrated, the adapter device 930 is configured to house the respective bearing inside of it (the housing seat of the bearing cannot be seen), however alternative embodiments in which the bearing is housed radially outside the adapter device are not excluded.

Figure 9 shows the essential components of an alternative embodiment of the bottom bracket assembly of the invention, which is indicated with 1004 and which differs from that of figure 3 only in that the O-ring is replaced by an elastic element 1065 having a quadrangular section. The elastic element 1065 can be glued to the main body 1029 of the adapter devices 1030 and 1035, but when this is made from composite material it is preferable to co-mould the elastic element 1065 with the main body 1029. The elastic element 1065 must, however, have a radially outer surface 1066 capable of interacting with the bottom bracket box 1003 to hold the adapter device 1030, 1035.

Figure 10 shows the essential components of an alternative embodiment of the bottom bracket assembly of the invention, which is indicated with 1104 and which differs from that of figure 3 in that the bearings 20 and 25 are supported radially outside the respective adapter devices 1130 and 1135. The first axial portion 45 and the second axial portion 50, which keep the axial dimensions described above, both interact with the outer surface 1152 of the bottom bracket box 3. In this case, the O-ring 65 is housed in an annular throat formed on the radially inner surface of the adapter device so as to project radially inwards with respect to such a radially inner surface.

The advantage of supporting the bearings radially outside the respective adapter devices 730, 735 is that a greater space is available for the shaft, which can therefore be over-sized, and therefore more rigid and thinner.

In the specific embodiments illustrated in figures 7 and 11, the bearings 20, 25 are supported axially in a front position with respect to the bottom bracket box. A further possibility (not illustrated) of coupling of the bearings is the one described in patent application No. EP 1792819 to the same Applicant, in which the radially most outer surface of the bearings is coupled with an inner surface of the crank arm.

With regard to the material from which the main bodies of the adapter devices described above are made, it is preferable to use a metallic material, like a light alloy, for example of aluminium or titanium. Alternatively, it is also possible to use a structural or reinforced composite material, or else a simple polymer.

By composite material it is meant a material consisting of at least two components including a polymeric matrix and a filler comprising for example structural fibres, granules or powders. The structural fibres are preferably selected from the group consisting of carbon fibres, glass fibres, aramid fibres, ceramic fibres, boron fibres and combinations thereof. Carbon fibres are particularly preferred. Preferably, the polymeric material is thermosetting and preferably comprises an epoxy resin. However, the possibility of using a thermoplastic material is not excluded.

By structural composite materials those materials that contain structural fibres with a length of more than five millimetres are meant.

By reinforced composite materials those materials comprising a polymeric matrix loaded with fibres of a length shorter than or equal to five millimetres and/or with powders and/or with granules are meant. It should be observed that the above-mentioned dimensions refer to the length of the fibre that can be found in a finished piece.

The reinforced composite materials have a lower structural strength than the structural composite materials, but are generally suitable for the injection moulding and can be easily worked, which is why they are particularly preferred for manufacturing the main bodies of the aforementioned adapter devices, to which they also give a considerable lightness.

Although up to now bottom bracket assemblies have always been described and illustrated in which both of the adapter devices are coupled by interference with the bottom bracket box, it is not excluded the possibility that just one of them be coupled in this way, so that the advantages deriving from it are still present, although to a more limited extent.

It should be observed that, in the present patent application, where a possibility of variation of a measurement has been indicated, like for example through the term "substantially" or similar, and also where a single measurement has been indicated without mentioning any possibility of variation, it should in any case be understood that there is a possibility of variation of the measurement itself at least equal to +/- 5%.

Moreover, where reference has been made to individual structural elements, the possibility that these elements be actually replaced by two or more elements capable of performing the same function is not excluded.

Finally, the embodiments described above can be combined with one another creating new embodiments.

Of course, a man skilled in the art can bring numerous modifications and variants to the adapter device described above, in order to satisfy specific and contingent requirements, all of which are anyway covered by the scope of protection of the present invention as defined by the following claims.

In particular, it should be noted that the second axial portion 50 could not be provided; in this case the entire coupling portion 40 is adapted to couple with interference with the bottom bracket box.

## Claims

1. Adapter device for coupling a bearing of a bottom bracket assembly with a bottom bracket box of a bicycle, the adapter device extending along a longitudinal axis and comprising a housing seat of the bearing and a portion for coupling with said box, said coupling portion comprising a portion for coupling with interference with said box, **characterised in that** said housing seat of the bearing occupies a position that, in the axial direction, is at least partially distinct from the position occupied by said portion for coupling with interference.

2. Adapter device according to claim 1, wherein the portion for coupling with interference has an outer diameter equal to 41.960 mm with tolerance of between +0.05 mm and +0.1 mm, or else it has an outer diameter equal to 41 mm with tolerance of between 0 mm and +0.05 mm or else between -0.08 mm and -0.03 mm.

3. Device according to claim 1 or 2, wherein the housing seat of the bearing occupies a position that, in the axial direction, coincides with the position occupied by the portion for coupling with interference for a part no longer than two thirds of the axial length of the portion for coupling with interference.

4. Device according to claim 3, wherein said part is no longer than one third of the length of the housing seat of the bearing.

5. Device according to any one of the previous claims, wherein the housing seat of the bearing occupies a position that, in the axial direction, is totally distinct from the position occupied by the portion for coupling with interference.

6. Adapter device according to any one of the previous claims, comprising an axial portion adapted to be inserted into, or fitted onto, said bottom bracket box and distinct from said portion for coupling with interference, wherein said axial portion distinct from the portion for coupling with interference is at least partially elastically yieldable.

7. Adapter device according to any one of the previous claims, comprising at least one surface of axial abutment having different radial dimensions with respect to those of said portion for coupling with interference.

8. Adapter device according to claim 7, wherein said at least one surface of axial abutment has a substantially circumferential extension.

9. Adapter device according to claim 7 or 8, wherein said at least one surface of axial abutment is defined on an end flange of said adapter device.

10. Adapter device according to claim 8 or claim 9 when depending on claim 8, wherein said at least one surface of axial abutment is axially arranged between said portion for coupling with interference and an axial portion adapted to be inserted into, or fitted onto, said bottom bracket box and distinct from said portion for coupling with interference.

11. Adapter device according to any one of the previous claims, wherein said portion for coupling with interference has an axial length (IL) shorter than or equal to half of the axial length (TL) of said adapter device.

12. Support group of a bottom bracket assembly in a bottom bracket box of a bicycle, comprising an adapter device according to any one of the previous claims and at least one bearing coupled with said adapter device.

13. Support group according to claim 12, wherein the axial length (IL) of said portion for coupling with interference is shorter than or equal to the axial length (BL) of said at least one bearing.

14. Support group according to claim 12 or 13, wherein said at least one bearing is coupled with said adapter device through a coupling with interference, a transition coupling or a coupling with clearance.

15. Bottom bracket assembly for a bicycle, comprising at least one support group according to any one of claims 12 to 14.

16. Assembly according to claim 15, comprising a shaft supported in rotation by said at least one bearing, said at least one bearing being coupled with interference with the shaft and being coupled through a transition coupling or a coupling with clearance with the respective adapter device.

17. Assembly according to claim 15, comprising a shaft supported in rotation by said at least one bearing, said at least one bearing being coupled with interference with the respective adapter device and being coupled through a transition coupling or a coupling with clearance with the shaft.

18. Bicycle comprising a bottom bracket box and at least one adapter device according to any one of claims 1 to 11 coupled with interference with said bottom bracket box.

19. Bicycle according to claim 18, wherein the bottom bracket box has at least one free end portion whose inner diameter is equal to 41.960 mm with tolerance of between 0 mm and +0.025 mm, or else whose inner diameter is equal to 41 mm with tolerance of between -0.08 mm and 0 mm or else between -0.08 mm and -0.03 mm.

20. Bicycle according to claim 18, wherein the bottom bracket box has at least one free end portion whose inner diameter is sized with a coupling tolerance belonging to classes H6 or H7 of the standard ISO/R 286 and the portion for coupling with interference has an outer diameter sized with a coupling tolerance belonging to classes n5, n6, p6, r6, s6, t6, u6 or x6 of the standard ISO/R 286.

21. Bicycle according to any one of claims 18 to 20, wherein said housing seat is at least partially arranged axially inside the bottom bracket box.

22. Bicycle according to any one of claims 18 to 20, wherein said housing seat is arranged axially outside the bottom bracket box.

23. Bicycle according to any one of claims 18 to 22, wherein the axial length of the portion for coupling with interference is shorter than or equal to one fifth of the axial length (L) of the bottom bracket box.
